Europäisches Patentamt

European Patent Office

Office européen des brevets

(19)

(11) Veröffentlichungsnummer.  **0 158 079**
**A2**

(12)                    **EUROPÄISCHE PATENTANMELDUNG**

(21) Anmeldenummer: 85102062.8

(22) Anmeldetag: 25.02.85

(51) Int. Cl.⁴: **G 06 K 7/08**

(30) Priorität: 25.02.84 DE 3411240

(43) Veröffentlichungstag der Anmeldung:
16.10.85  Patentblatt 85/42

(84) Benannte Vertragsstaaten:
FR GB IT

(71) Anmelder: Machate, Jürgen
Münchner Strasse 17c
D-8017 Ebersberg(DE)

(72) Erfinder: Machate, Jürgen
Münchner Strasse 17c
D-8017 Ebersberg(DE)

(74) Vertreter: Von Bezold, Dieter, Dr. Patentanwälte
Dr.Dieter v. Bezold et al,
Dipl.-Ing. Peter Schütz Dipl.-Ing. Wolfgang Heusler
Postfach 860260 Maria-Theresia-Strasse 22
D-8000 München(DE)

(54) Kapazitiver Datenträgerleser.

(57) Es wird ein kapazitiver Datenträgerleser sowie ein Datenträger hierfür beschrieben. Der Leser arbeitet mit einer kapazitiven Brückenschaltung. Der Datenträger ist robust, fälschungssicher und billig in der Herstellung.

Fig. 3

EP 0 158 079 A2

DR. DIETER V. BEZOLD
DIPL. ING. PETER SCHÜTZ
DIPL. ING. WOLFGANG HEUSLER
PATENTANWÄLTE
MARIA-THERESIA-STRASSE 22
POSTFACH 860260
D-8000 MUENCHEN 86

ZUGELASSEN BEIM
EUROPÄISCHEN PATENTAMT
EUROPEAN PATENT ATTORNEYS
MANDATAIRES EN BREVETS EUROPÉENS

TELEFON (089) 470 60 06
TELEX 522638
TELEGRAMM SOMBEZ
FAX GR II + III (089) 2716063 .

0158079

11751 (Ausl)

Dr.v.B/Schä/16

Jürgen Machate

Münchner Straße 17c, D-8017 Ebersberg (DE)

### Kapazitiver Datenträgerleser

Die Erfindung betrifft eine Einrichtung zum kapazitiven Abtasten von Datenträgern, wie Etiketten, die ein Substrat aus nichtleitendem Material enthalten, das an bestimmten Markierungs-Plätzen besondere Markierungen aus leitendem Material trägt, die z. B. durch Aufdrucken leitender Farbe oder durch Aufbringen von Metallfolie gebildet werden können. Solche Einrichtungen sind aus DE-C-28 17 388 bekannt.

Die in alle Bereiche der Wirtschaft vordringende elektronische Datentechnik benötigt neue Techniken zur automatischen Erkennung von Gegenständen. Als Beispiel seien die optisch lesbaren Strichcode-Etiketten genannt, wie sie in Warenhäusern verwendet werden. In Fertigungsstraßen werden automatisch lesbare Kennungen benötigt, um den Materialfluß zu steuern. Für die Identifizierung von Eisenbahnwägen existiert ein System, das mit Resonanzkreisen im Mikrowellenbereich arbeitet. Handelt es sich um den Nachweis der Echtheit eines Gegenstandes, so werden maschinenlesbare Etiketten benötigt, deren Information ohne Hilfsmittel schwer erkennbar und fälschungssicher sein muß. Für die Erkennung von Gegenständen, die rauhen Umgebungsbedingungen ausgesetzt sind, muß das Etikett sehr robust sein. Bei Massengütern werden besondere Anforderungen an die einfache und preisgünstige Herstellung der Etiketten gestellt.

POSTSCHECK MÜNCHEN NR. 69148-800 · BANKKONTO HYPOBANK MÜNCHEN (BLZ 70020040) KTO. 6060257378 SWIFT HYPO DE MM

Die bekannten Etiketten und die zugehörigen Leser erfüllen die Anforderungen hinsichtlich Robustheit, Fälschungssicherheit und Herstellungspreis nicht oder nur teilweise.

Bei den Strichcode-Lesern sind zwar die Etiketten preisgünstig herzustellen, aber die Information ist sichtbar und daher fälschbar; außerdem führen Verschmutzungen zu Lesefehlern. Andere Leseeinrichtungen, wie z. B. Mikrowellenresonanzkreise, sind zu aufwendig. Letzteres gilt auch für Datenträger, die aus veränderbaren Permanentmagneten bestehen.

Der Erfindung liegt die Aufgabe zugrunde, eine Einrichtung zum kapazitiven Abtasten von Datenträgern des oben erwähnten Typs anzugeben, die bereits bei Annäherung des Datenträgers die in diesem enthaltene Information ausliest, die dennoch störungsfrei arbeitet und bei der es zulässig ist, den Datenträger auf leitendem Untergrund anzuordnen. Ferner sollen durch die Erfindung Datenträger, wie Etiketten, angegeben werden, die den oben erwähnten Anforderungen genügen.

Eine bevorzugte Ausführungsform eines Datenträgers gemäß der Erfindung ist eine Markierungen tragende Etikette mit einem Substrat aus nichtleitendem Material, wie Papier oder Plastik, auf das an vorgegebenen Markierungsplätzen besondere Markierungen entsprechend dem gewünschten Informationsinhalt oder Code aufgebracht worden sind. Das Aufbringen der leitenden Markierungen kann durch Aufdrucken von leitfähiger Farbe oder Aufbringen sehr dünner, leitender Folien geschehen. Es können so viele Markierungsplätze neben- und/oder untereinander angeordnet sein, wie Lesestellen im zugehörigen Lesegerät (Leser) vorhanden sind. Der Leser erkennt die Information als Binärwert. Eine vorhandene Markierung entspricht z. B. dem Binärwert 1 und umgekehrt entspricht eine fehlende Markierung dem Binärwert -0.- Die Markierungen können zum Schutz und/oder zur Unkenntlichmachung mit einer nichtleitenden Schicht, z. B. aus Kunststoff oder Papier, abgedeckt werden. Diese Abdeckschicht kann mit einem optisch lesbaren Aufdruck aus nichtleitender Farbe versehen sein. Die Etiketten werden mit ihrer Rückseite auf einen zu identifizierenden Gegenstand aufgebracht, vorzugsweise durch Kleben. Da viele Gegenstände aus leitendem Material bestehen, darf dies nicht zur Lesefehlern führen; außerdem darf auch das Annähern von größeren leitenden Flächen an den Leser keine Fehllesungen verursachen.

Üblicherweise wird die gewünschte Information durch einen leitenden Aufdruck an den entsprechenden Markierungspositionen hergestellt. Es ist aber auch möglich, alle Markierungsplätze mit Teilflächenelementen zu versehen, die miteinander verbunden sind und deren Verbindung je nach der gewünschten Information getrennt oder beibehalten wird. Auf diese Weise ist es möglich, große Mengen gleicher Etiketten zu drucken und später nach Bedarf zu programmieren.

Die Erfindung wird anhand von Ausführungsbeispielen näher erläutert. Es zeigen:

Fig. 1 eine perspektivische Darstellung eines auf einen zu identifizierenden Gegenstand aufgebrachten Etiketts und eines Teiles eines zugehörigen Lesegerätes;

Fig. 2 ein Schaltbild eines Teiles eines Lesers;

Fig. 3 ein Ersatzschaltbild für die Fig. 2;

Fig. 4 ein Beispiel einer programmierbaren Markierung, und

Fig. 5 einen Teil eines Etiketts gemäß einer Ausführungsform der Erfindung.

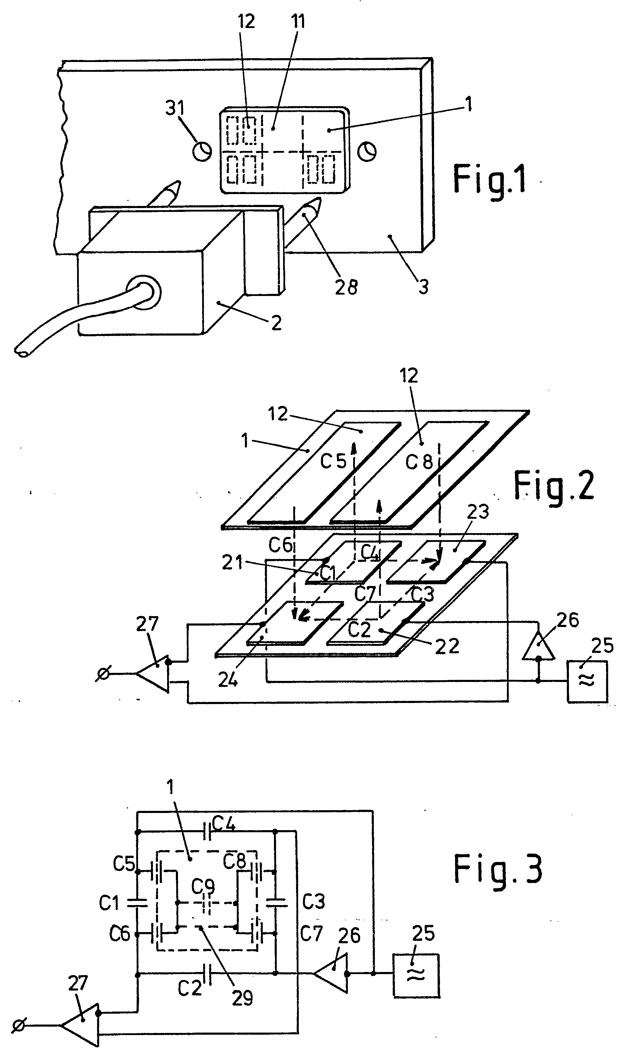

Fig. 1 zeigt einen Datenträger gemäß der Erfindung in Form eines Etiketts 1, das auf einem zu identifizierenden Gegenstand 3 befestigt ist. Die Lesung erfolgt nach ausreichender Näherung eines Lesekopfes 2 eines Lesers an das Etikett 1, wobei die Positionierung des Lesekopfes in seitlicher Richtung durch in Bohrungen 31 des Gegenstandes 3 eingreifende, vom Lesekopf vorspringende Stifte 28 erfolgt.

Das dargestellte Etikett hat sechs Markierungsplätze 11, von denen drei mit Markierungen 12 versehen sind, welche jeweils aus zwei nebeneinander angeordneten, elektrisch leitenden Teilflächen bestehen. Die Markierungen sind durch eine Deckschicht verdeckt.

Der Aufbau und die Arbeitsweise des Lesers wird im folgenden am Beispiel eines einzigen Markierungsplatzes unter Bezugnahme auf Fig. 2 erläutert. Der Leser enthält eine Oszillatoranordnung mit einem Oszillator 25 und einem Inverter 26, der ein dem Oszillatorsignal gegenphasiges Signal erzeugt. Diese beiden gegenphasigen Signale werden von den Ausgangsklemmen der Oszillatoranordnung rechteckigen Sendeflächen 21 bzw. 22 zugeführt, die sich auf einer Sensor- oder Leserfläche des Lesekopfes diametral gegenüberstehen. Auf der Leserfläche befinden sich ferner zwei ebenfalls diametral zueinander angeordnete rechteckige Empfängerflächen 23 und 24 die an die Eingänge eines Differenzverstärkers 27 angeschlossen sind.

Das Etikett 1 hat ein Substrat aus nichtleitendem Material, wie Papier oder Kunststoff, und trägt an dem betrachteten Markierungsplatz eine Markierung aus zwei leitenden Teilflächen 12, die beim Lesen so positioniert sind, daß sie sich im wesentlichen über einer der Sendeflächen und einer der Empfängerflächen in gleichem Abstand von diesen Flächen befinden. Im Ruhezustand des Lesers, also bei nicht vorhandenem oder weit entferntem Etikett, treten kapazitive Kopplungen ausschließlich zwischen den Sendeflächen 21, 22 und den Empfängerflächen 23, 24 auf. Die Anordnung ist symmetrisch, so daß die Koppelkapazitäten C1 bis C4 gleich groß sind. Da die beiden Sendesignale gleiche Amplitude aufweisen, aber gegenphasig sind, entsteht an den mit den Empfängerflächen verbundenen Eingängen des Differenzverstärkers 27 allenfalls nur eine sehr kleine Wechselspannung. Erst bei Annäherung einer wirksamen Markierung aus zwei elektrisch getrennten Teilflächen 12 wird die durch die Kapazitäten gebildete Brückenanordnung infolge einer Reihenschaltung von "Aus-

koppelkapazitäten" C5 und C7 mit "Einkoppelkapazitäten" C6 und C8 aus dem Gleichgewicht gebracht, und es entstehen daher relativ große, gegenphasige Wechselspannungen an den Eingängen des Differenzverstärkers 27. Diese Eingangsspannungen hoher Amplitude erzeugen ein Ausgangssignal hoher Amplitude am Ausgang des Differenzverstärkers 27. Eine nachgeschaltete Auswerteschaltung, insbesondere eine Schwellenwertschaltung, bewertet die Amplitudenhöhe der Ausgangsspannung.

Die Ausgänge der Differenzverstärker, die den verschiedenen Markierungsplätzen zugeordnet sind, können z.B. mit einer üblichen Decodierschaltung verbunden sein.

In Fig. 3 ist das elektrische Ersatzschaltbild der Leseanordnung und der Markierung dargestellt. Ohne Markierung entfallen die Kapazitäten C5... C8; die Kapazitäten C1... C4 zwischen den Sende- und den Empfängerflächen bilden eine abgeglichene Brückenschaltung. Die Annäherung einer Markierung des Etiketts bewirkt die zusätzlichen kapazitiven Kopplungen durch C5+C6 bzw. C7+C8 parallel zu C1 bzw. C3 und damit eine erhebliche Verstimmung der Brückenschaltung.

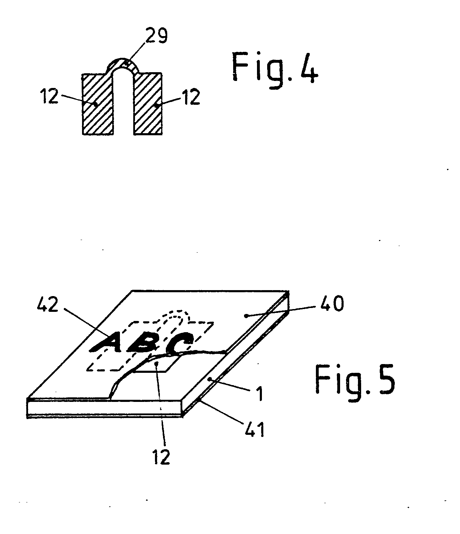

Eine besondere Ausführungsform einer Markierung für einen Datenträger gemäß der Erfindung ist in Fig. 4 dargestellt. Die beiden Teilflächen 12 der Markierung sind hier durch einen dünnen, leitfähigen Steg elektrisch miteinander verbunden. Aus Fig. 3 ist zu erkennen, daß die Brücke 29 abgeglichen bleibt, solange C5 und C6 bzw. C7 und C8 gleiche Kapazitätswerte haben, was mit hinreichender Genauigkeit der Fall ist, wenn die Sende- und Empfangsflächen oder -Elektroden in der beschriebenen, erfindungsgemäßen Weise angeordnet und die beiden Teilflächen 12 der Markierung elektrisch miteinander verbunden und so geformt und orientiert sind, daß die Brücke abgeglichen bleibt, wie oben erläutert wurde. Die Markierung gemäß Fig. 4 gestattet es, alle Markierungsplätze mit Markierungen aus Teilflächen-Paaren zu versehen, die jeweils durch einen Steg 29 elektrisch verbunden sind. Der Datenträger kann dann später dadurch nach Wunsch programmiert werden, daß man bestimmte Stege durchtrennt und andere beibehält.

Fig. 5 zeigt einen Teil eines Datenträgers mit elektrischer Abschirmung gegen Fremdfelder. Auf der Oberseite des Substrats des dargestellten Teiles des Etiketts 1 ist eine Markierung mit Hälften oder Teilflächen 12 aufgedruckt, die durch eine nichtleitende Abdeckschicht 40 geschützt und unsichtbar gemacht ist. Die Abdeckschicht 40 ist mit optisch lesbaren Informationen 42 bedruckt. Auf der Unterseite weist das Etikett eine leitfähige Schicht 41 auf, die durch Drucken oder durch Aufkaschieren einer leitfähigen Folie hergestellt werden kann. Die Schicht 41 wirkt als Kapazität C9, wie es in Fig. 3 dargestellt ist. Solange C5 und C6 bzw. C7 und C8 gleich groß sind, bleibt auch hier die Brücke im Gleichgewicht. Damit ist gewährleistet, daß die Funktion des Etiketts auch dann nicht beeinträchtigt wird, wenn der mit dem Etikett versehene, zu identifizierende Gegenstand 3 eine elektrisch leitende Oberfläche hat.

0158079

11751 Dr.v.B/Schä/16

Patentansprüche

1. Einrichtung zum kapazitiven Abtasten von Datenträgern mit einem Substrat aus nichtleitendem Material, das an mindestens einem von mehreren vorgegebenen Markierungs-Plätzen eine Markierung aus leitendem Material trägt,

mit einer Wechselspannungsgeneratoranordnung (25, 26), die zwei Ausgänge für zwei gegenphasige Sende-Wechselspannungen gleicher Amplitude hat,

dadurch gekennzeichnet, daß für jeden Markierungsplatz des Datenträgers vorgesehen sind:

a) ein Paar von in einer Ebene nebeneinander angeordneter, elektrisch leitender Sendeflächen (21, 22), die jeweils mit einem der Sendewechselspannungs-Ausgänge gekoppelt sind,

b) ein Paar von Empfängerflächen (23, 24), die bezüglich der Sendeflächen (21, 22) derart symmetrisch angeordnet sind, daß die den Sendeflächen zugeführten gegenphasigen Sendewechselspannungen im wesentlichen keine Spannung zwischen den Empfängerflächen erzeugen, wenn sich keine wirksame Datenträger-Markierung in der Nähe dieser Flächen (21 - 24) befindet, und

c) einem Differenzverstärker, der zwei Eingänge, welche mit den Empfängerflächen (23, 24) verbunden sind, und einen Ausgang, an den eine Verbraucheranordnung angeschlossen ist, hat.

2. Einrichtung nach Anspruch 1, dadurch gekennzeichnet, daß die beiden Sendeflächen (21, 22) mit den in bezug auf sie um etwa 90° diametral versetzt liegenden Empfängerflächen (23, 24) gleich große Koppelkapazitäten (C1...C4) bilden, wobei die Sendeflächen (21, 22) mit den Empfängerflächen (23, 24) eine abgeglichene Brücke bilden, so daß sich bei entferntem Datenträger an den Eingängen des mit den Empfängerflächen verbundenen Differenzverstärkers (27) aufgrund der abgeglichenen Brückenschaltung praktisch keine Wechselspannungen ausbilden und daß bei ausreichender Annäherung einer Markierung, die zwei leitfähige Teilflächen (12) auf dem nichtleitenden Substrat enthält, zusätzliche Auskoppelkapazitäten (C5 bzw. C7) entstehen, die mit zusätzlichen Einkoppelkapazitäten (C6 bzw. C8) die Brückenschaltung deutlich verstimmen, wodurch hinreichend große Wechsel-spannungen an den Eingängen des Differenzverstärkers erzeugt werden, die weiter ausgewertet werden können.

3. Datenträger für eine Einrichtung nach Anspruch 1, **dadurch gekennzeichnet,** daß jede wirksame Markierung mindestens ein leiten-des Element (12) enthält, welches bei genügender Annäherung an die die Sende- und Empfängerflächen enthaltende Ebene die eine der Sendeflächen (21 oder 22) mit der einen der Empfängerflächen (23 bzw. 24) kapazitiv koppelt.

4. Datenträger nach Anspruch 3, dadurch gekennzeichnet, daß jede Markierung des Datenträgers (1) mindestens ein Paar leitender Flächen (12) aus leitfähigem Material enthält, die auf dem Substrat angeordnet sind, deren Breite im wesentlichen gleich der Breite der Sendefläche (21 oder 22) ist und deren Länge im wesentlichen gleich der doppelten Breite der Sendeflächen ist.

5. Datenträger nach Anspruch 4, **dadurch gekennzeichnet,** daß die beiden Flächen (12) einer Markierung durch einen leitfähigen Steg (29) miteinander verbunden sind, der zur Änderung des Datenwertes der die beiden Flächen enthaltenden Markierung unterbrochen werden kann.

6. Datenträger nach einem der Ansprüche 3, 4 oder 5, **dadurch gekennzeichnet,** daß der Datenträger auf der den Markierungen entgegengesetzten Seite des Substrats eine durchgehende Abschirm-schicht aus leitfähigem Material aufweist.

0158079

Fig.1

Fig.2

Fig.3

0158079

Fig.4

29

12     12

Fig.5

42

A B C

40

1

41

12